# EUROPEAN PATENT SPECIFICATION

(11) **EP 4 630 310 B1**
(45) Date of publication and mention of the grant of the patent: **20.05.2026**
(21) Application number: 23818047.5
(22) Date of filing: 05.12.2023
(51) Int. Cl.: B62D 25/06

(54) **A UNITARY ROOF RING OF A VEHICLE FRAMEWORK**
EINHEITLICHER DACHRING EINES FAHRZEUGRAHMENS
ANNEAU DE TOIT UNITAIRE D'UN CADRE DE VÉHICULE

(30) Priority: 07.12.2022 EP 22383193
(43) Date of publication of application: 15.10.2025
(73) Proprietor: AUTOTECH ENGINEERING, S.L., 48340 Amorebieta-Etxano (ES)
(72) Inventor: BARTOLOMUCCI, Dean Gary, Columbus, Michigan MI 48063 (US); FISTLER, Matthew Scott, Oxford, Michigan MI 48371 (US); VALENCIA CARRIO, Javier, 08241 Manresa (ES)
(74) Representative: Bardehle Pagenberg S.L.
(86) International application number: PCT/EP2023/084348
(87) International publication number: WO 2024/121149

(56) References cited:
- WO-A1-2022/064256
- CN-U- 217 456 120
- DE-A1- 102016 124 931
- US-A1- 2007 228 777
- US-A1- 2012 161 475
- US-A1- 2021 221 439

## Description

The present application claims the benefit of European patent application n° 22 383 193.4 filed on December 7^{th} 2022.

The present disclosure relates to unitary roof rings for vehicles and methods of manufacturing unitary roof rings for vehicles.

### BACKGROUND

Vehicles such as cars incorporate a structural skeleton designed to withstand all loads that the vehicle may be subjected to during its lifetime. The structural skeleton is further designed to withstand and absorb impacts, in case of e.g. collisions with other cars, obstacles or pedestrians.

The structural skeleton of a vehicle, e.g. a car, in this sense may include e.g. bumpers, pillars (A-pillar, B-pillar, C-pillar, D-pillar), side impact beams, rockers or sills, hinge pillars and shock absorbers.

Press hardening, also known as Hot Forming Die Quenching (HFDQ) typically uses boron steel sheets to create stamped components with Ultra-high Strength Steel (UHSS) properties, with tensile strengths of e.g. 1.500 MPa or 2.000 MPa or even more. The increase in strength allows for a thinner gauge material to be used, which results in weight savings over conventionally cold stamped mild steel components. Throughout the present disclosure UHSS may be regarded as a steel having an ultimate tensile strength of 1.000 MPa or more, particularly after a press hardening process.

In a HFDQ process, a blank to be hot formed may be heated to a predetermined temperature e.g. austenization temperature or higher (and particularly between Ac3 and an evaporation temperature of e.g. a coating of the blank). A furnace system may be used for this purpose. Depending on the specific needs, a furnace system may be complemented with additional heaters, e.g. induction or infrared heaters. By heating the blank, the strength of the blank is decreased and deformability increases i.e. to facilitate the hot stamping process.

There are several known Ultra-high Strength steels (UHSS) for hot stamping and hardening. The blank to be hot formed may be made e.g. of a boron steel, coated or uncoated, such as Usibor^{®} (22MnB5) commercially available from ArcelorMittal.

Typical vehicle components that may be manufactured using the HFDQ process include: door beams, bumper beams, cross/side members, A/B pillar reinforcements, front and rear rails, seat crossmembers and roof rails.

Hot forming of boron steels is becoming increasingly popular in the automotive industry due to their excellent strength and formability. Many structural components that were traditionally cold formed from mild steel are thus being replaced with hot formed equivalents that offer a significant increase in strength. This allows for reductions in material thickness (and thus weight) while maintaining the same strength.

In order to improve the ductility and energy absorption in specific areas of a component, it is known to introduce softer regions within the same component. This improves ductility locally while maintaining the required high strength overall. By locally tailoring the microstructure and mechanical properties of certain structural components such that they comprise regions with very high strength (very hard regions), i.e. regions with high ultimate tensile strength and high yield strength and regions with increased ductility (softer regions), i.e. regions with lower ultimate tensile strength and lower yield strength and increased elongation before break, it may be possible to improve their overall energy absorption and maintain their structural integrity during a crash situation and also reduce their overall weight. Such soft zones may also advantageously change the kinematic behavior in case of a collapse of a component under an impact.

Known methods of creating regions with increased ductility ("softzones" or "soft zones") in structural components of vehicles include the provision of tools comprising a pair of complementary upper and lower die units, each of the units having separate die elements (steel blocks). A blank to be hot formed is previously heated to a predetermined temperature e.g. austenization temperature or higher by, for example, a furnace system so as to decrease the strength i.e. to facilitate the hot stamping process.

The die elements may be designed to work at different temperatures, in order to have different cooling rates in different zones of the part being formed during the quenching process, and thereby resulting in different material properties in the final product e.g. soft areas which will generally have a lower ultimate tensile strength and a lower yield strength, but allow for more elongation before breaking. E.g. one die element may be cooled in order to quench the corresponding area of the component being manufactured at high cooling rates and to thereby reduce the temperature of the component rapidly and obtain a hard martensitic microstructure. Another neighboring die element may be heated in order to ensure that the corresponding portion of the component being manufactured cools down at a lower cooling rate, in order to obtain a softer microstructure, including e.g. bainite, ferrite and/or perlite. Such an area of the component may remain at higher temperatures than the rest of the component when it leaves the die.

Other methods for obtaining hot stamped components with areas of different mechanical properties include e.g. tailored or differentiated heating prior to stamping, and local heat treatments after a stamping process to change the local microstructure and obtain different mechanical properties. Yet further possibilities include the use of patchwork blanks, and Tailor Welded Blanks (TWB) combining different thicknesses and/or materials in blanks.

UHSS may exhibit tensile strengths as high as 1.500 MPa, or even 2.000 MPa or more, particularly after a press hardening operation. Once hardened, a UHSS may have a martensitic microstructure. This microstructure enables an increased maximum tensile strength and yield strength per weight unit.

In addition to the Ultra-high Strength Steels mentioned before, more ductile steels may also be used in parts of the structural skeleton requiring energy absorption. These steels may be used in hot stamping processes but will not obtain a martensitic microstructure in the process. Ductibor^{®} 1000 is an example of a suitable, more ductile steel.

The upper frame of the structural skeleton of a vehicle may be formed by connecting multiple structural parts. These structural parts form a roof ring, which is one of the structures which plays a role in the protection of the vehicle in impact events. The roof ring of a vehicle may generally comprise four beams, i.e. two longitudinal rail portions, commonly known as roof rails, and front and rear cross members, commonly known as front and rear headers. The roof rails are located between the A-pillar and the C-pillar of the vehicle. The front header is located between the A-pillars and the rear header is located between the C-pillars. In a crash event, the roof ring has a crucial part in ensuring the integrity of the vehicle.

The four beams comprising the roof ring may have different thicknesses and may be manufactured differently. The roof rails and the front header are parts with a high desired stiffness, achieved generally by hot stamping ("press hardening") and aim to limit the intrusion in the case of impact at a relatively low weight. The rear header is typically made of a material suitable for cold stamping. After manufacturing these four beams, they are generally welded together when being assembled with the rest of the vehicle framework or "Body-in-White".

One problem that has been encountered is that the several welding spots and seams can lead to vulnerable parts in collision. Other issues to be considered are weight, manufacturability, time necessary to build the vehicle and cost.
Document US 2007/0228777 A1 discloses a roof structure for a vehicle including a tailor-welded blank. Document US 2021/0221439 A1 discloses a method for manufacturing a unitary body side structural frame for a vehicle comprising providing a plurality of blanks, joining the blanks to each other to form a composite blank forming one or more overlapping regions formed by partially overlapping two blanks and deforming the composite blank.

The present disclosure provides examples of systems and methods that provide improvements over prior art roof structures.

### SUMMARY

In a first aspect, a method for manufacturing a unitary roof ring of a vehicle structural framework is provided. The method comprises providing a plurality of blanks, joining the blanks to form a combined blank, deforming the combined blank to form a unitary roof ring, wherein the unitary roof ring includes two longitudinal rail portions each connected to a front cross member and to a rear cross member to form a substantially closed ring shape.

Joining the blanks to each other to form a combined blank and then deforming the combined blank, provides a light and resistant roof ring built in fewer steps. Joining the blanks together prior to deforming enables manufacturing of a roof ring with no or less heat affected zones, because welding operations after forming are reduced. Less heat affected zones reduce the risk of cracks in the upper frame of the structural skeleton in case of a collision. All this may allow having an increase in strength of the roof ring while reducing thickness of the blanks and reducing the weaknesses of the final ring. The crash performance may therefore be improved while achieving a mass reduction of the upper frame of the vehicle, which may lead to the possibility of reducing thickness of neighbouring components of the roof ring.

In some examples, the plurality of blanks comprises a front cross beam blank, two longitudinal beam blanks and a rear cross beam blank. In some examples, the plurality of blanks may be made from an ultra-high strength steel (UHSS), one or more of the blanks may be made specifically from boron steel.

In some examples, blanks from different material thickness and/or grades may be used in order to satisfy specific strength, anti-intrusion and energy absorption requirements and optimizing weight.

In some examples, joining the blanks comprises forming one or more overlapping regions formed by partially overlapping the blanks with each other. In this disclosure, partially overlapping two blanks means that only a portion of the two blanks overlaps.

The one or more overlapping regions may be arranged to counteract the reduction of material and therefore of strength that may occur in some sections of the unitary roof ring when compared to solutions wherein the structural components are first formed and then joined to form the upper structural frame.

Alternatively, or additionally, the overlap may be arranged in locations wherein high loads are expected e.g. by arranging patch blanks within the blanks.

Throughout the present disclosure, front and rear cross beam blanks may be regarded as blanks that are subsequently deformed to form the front and rear cross members of the roof ring. Similarly, the longitudinal beam blanks may be regarded as blanks that are subsequently deformed to form the longitudinal rail portions of the roof ring.

The roof rails and the front and rear headers of the vehicle are structural members of the upper structural frame of the vehicle. In some examples, the longitudinal rail portions included in the unitary roof ring may be the roof rail outer members of the vehicle framework, and the front cross member and the rear cross member included in the unitary roof ring may be the front header and the rear header of the vehicle framework.

The unitary roof ring may define the upper structural frame of a vehicle.

In some examples, deforming the combined blank to form a unitary roof ring of a vehicle framework comprises hot stamping the combined blank. Hot stamping is a process which allows suitable deformation of ultra-high strength steel to form the complicated resulting structure of the unitary roof ring.

In some examples, deforming the combined blank may be done in a single operation. Deforming the combined blank in a single operation may result in the improvement of the efficiency of the manufacturing process of a roof ring of a vehicle framework.

In a further aspect, a unitary roof ring as obtained by a method according to any of the examples herein described is provided.

### BRIEF DESCRIPTION OF THE DRAWINGS

Non-limiting examples of the present disclosure will be described in the following, with reference to the appended figures, in which:
Figure 1 shows an example of a unitary roof ring of a vehicle framework;
Figure 2 shows an example of a plurality of blanks prior to being joined to form a combined blank;
Figure 3 shows an example of a schematic view of a combined blank formed by four joined blanks;
Figure 4 shows an example of a combined blank comprising patch blanks;
Figure 5 shows an example of a combined blank comprising five joined blanks;
Figure 6 shows an example of a unitary roof ring after deforming the combined blank;
Figure 7 shows an example of an enlarged view of joined blanks after deforming in a unitary roof ring of a vehicle framework;
Figure 8 shows an example of a front view of a unitary roof ring of a vehicle framework; and
Figure 9 is a flow chart of a method for manufacturing a unitary roof ring of a vehicle framework.

The figures refer to example implementations and may only be used as an aid for understanding the claimed subject matter, not for limiting it in any sense.

### DETAILED DESCRIPTION OF EXAMPLES

In these figures, the same reference signs have been used to designate matching elements.

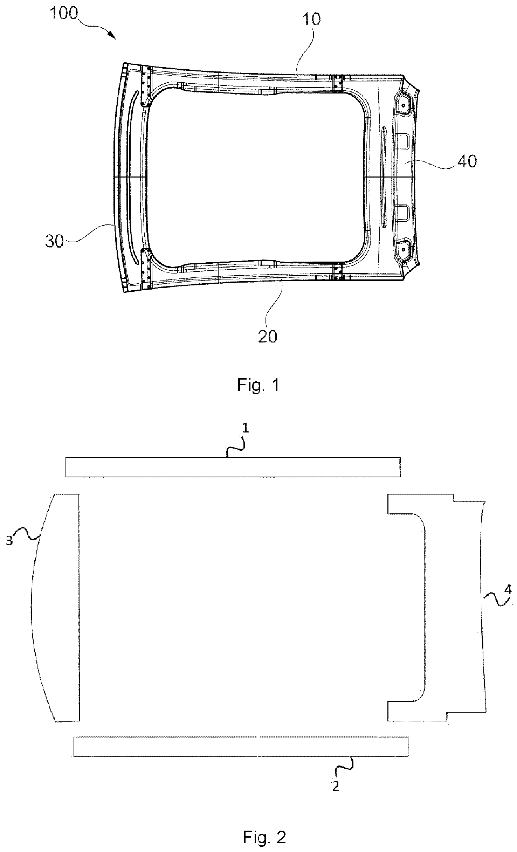

Figure 1 schematically represents a unitary roof ring 100 of a vehicle framework according to an example of the present disclosure. The unitary roof ring 100 includes two longitudinal rail portions 10, 20 each connected to a front cross member 30 and to a rear cross member 40 to form a substantially closed ring shape.

In some examples, the unitary roof ring 100 may be installed in the upper frame of the vehicle framework and may define an upper structural frame of a vehicle. The unitary roof ring may be joined to other parts of the vehicle framework, like the A-pillars, C-pillars and roof panels.

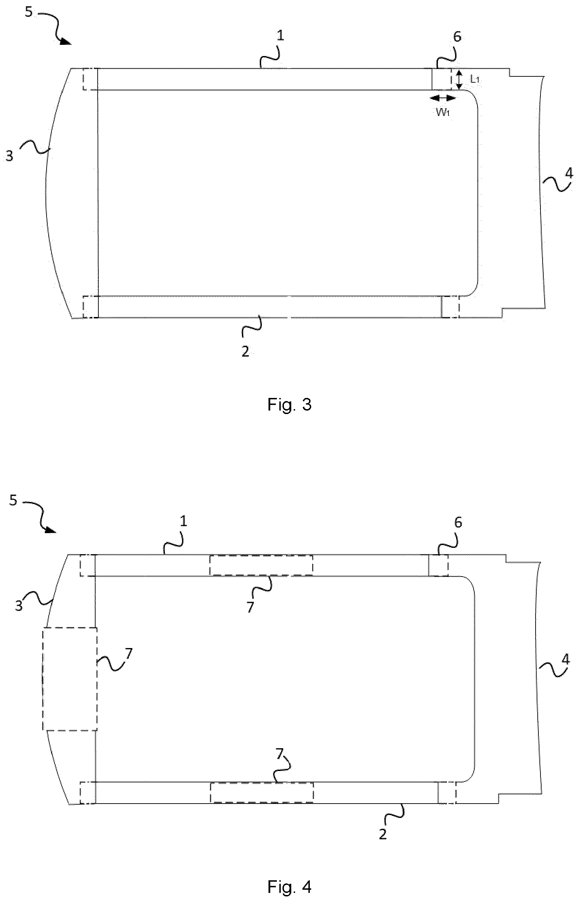

The unitary roof ring 100 may be made from a plurality of blanks in a single deformation process. As schematically illustrated in Figure 2, the unitary roof ring 100 may be made from four blanks, a first blank 1, a second blank 2, a third blank 3 and a fourth blank 4, wherein the first and second blanks 1, 2 may be longitudinal beam blanks 1, 2, and the third and fourth blanks 3, 4 may be cross beam blanks 3, 4. The third blank 3 may be a front cross beam blank 3 and the fourth blank 4 may be a rear cross beam blank 4. The blanks may be joined to form a combined blank. The longitudinal beam blanks 1, 2 may be joined to the front cross beam blank 3 and to the rear cross beam blank 4. A combined blank 5 including the four blanks 1, 2, 3, 4 may thus be formed as shown in Figure 3.

In a subsequent step, the combined blank 5 may be deformed. Particularly, the combined blank may be heated to above an austenization temperature, e.g. around 900 - 920°C in a furnace or an alternative heating system. And subsequently, the combined blank may be deformed and hardened in a press apparatus. Particularly, rapid cooling above a critical cooling rate of the combined blank may achieve a martensitic microstructure and high ultimate tensile strength and high yield strength.

In some examples, the blanks may be joined with each other by forming one or more overlapping regions 6 formed by partially overlapping the blanks with each other. That is, one blank is only partially positioned over another blank and the blanks are then joined to each other. An overlapping region thus acquires an increased thickness as compared to the remainder of the blanks. Such an increase in thickness can be used to tailor mechanical properties as needed and provide local reinforcements, e.g. in areas where increased strength and/or stiffness are required.

In some examples, overlapping regions 6 may be formed at or near a junction or transition of the front cross member 30 with one of the longitudinal rail portions 10, 20. When combining the different components into a unitary roof ring 100 by deforming a single blank, these junctions have less material than they would have when separately manufacturing component and subsequently welding them together. By providing overlapping regions 6 at or near those junctions, extra material can be added and thus maintain mechanical behaviour and kinematic properties of the roof ring 100. In other examples, the combined blank might be formed by edge-to-edge welding of blanks (like a Tailor Welded Blank), or the combined blank might be formed both by using overlapping blanks in specific regions, and using edge-to-edge welding in other regions.

In some examples, an overlapping region 6 may be formed substantially within the front member 30. That is, in these examples, the blanks constituting the longitudinal beams overlap with the blank(s) constituting the front member 30. In the resulting product, the overlap may be positioned completely or almost completely within the front member 30 of the resulting unitary roof ring. In other examples, overlapping regions 6 may be formed in each of the junctions or transitions of the front and rear cross members 30, 40 with the two longitudinal rail portions 10, 20. The overlapping may be done by any of laser welding, arc welding or spot welding.

In some examples, as shown in Figure 3, joining the blanks comprises joining a first end of a first longitudinal beam blank 1 to a first end of a front cross beam blank 3 and a second end of the first longitudinal beam blank 1 to a first end of a rear cross beam blank 4, and joining a first end of a second longitudinal beam blank 2 to a second end of a front cross beam blank 3 and a second end of a second longitudinal beam blank 2 to a second end of a rear cross bream blank. The blanks may be welded to each other, e.g. through laser welding or spot welding. The region 6 where the blanks are joined may be seen in Figure 3.

In some examples, joining the blanks to form a combined blank 5 comprises providing the combined blank 5 with a substantially rectangular (annular) shape.

In some examples, the longitudinal beam blanks 1, 2 may be joined to the cross beam blanks 3, 4 on the outer/upper side of the roof ring. In other examples, the longitudinal beam blanks 1, 2 may be joined to the cross beam blanks 3, 4 on the inner/lower side of the roof ring.

In some examples, the overlapping region 6 may have a length L₁ corresponding to a width of the longitudinal rail portion 10, 20 and may have a width W₁ of at least 5 cm. In some examples, the overlapping regions 6 may be formed at each of the junctions of the front and rear cross members 30, 40 with the two longitudinal rail portions 10, 20. Suitable dimensions for the overlapping region 6 may be chosen taking into account weldability, strength and stiffness requirements. A larger overlapping region 6 means an increase in thickness over a larger area, and thus an increase in strength and stiffness locally in the roof ring 100.

In other examples, the plurality of blanks may be formed by a plurality of blanks or sub-blanks, e.g. of different thicknesses and/or different materials. In these examples, the plurality of blanks forming the longitudinal beam blanks and/or the cross beam blanks may be Tailor Welded Blanks (TWB). The TWB may be formed by joining the sub-blanks by edge-to-edge welding, wherein welding may comprise laser welding. In other examples, the plurality of blanks forming the longitudinal beam blanks 1, 2 and/or the cross beam blanks 3, 4 may be joined by forming one or more overlapping regions 6 formed by partially overlapping the blanks to each other. In these cases, any of laser welding, arc welding or spot welding may be used.

As schematically illustrated in Figure 4, in some examples a patch blank 7 may be joined to at least one of the plurality of the blanks that may form the combined blank 5. A patch blank may be regarded herein as a blank that entirely overlaps another blank, i.e. a patch blank may be positioned entirely within a perimeter of another blank. The patch blank may be joined to the other blank by welding, e.g. spot welding or remote laser welding. The resulting combination of "basic" blank and patch blank may sometimes be referred to as "patchwork blank".

The patch blank 7 may be added substantially in a central portion of one of the blanks. A patch blank 7 may be added as a reinforcement in order to increase strength of a specific area of the combined blank 5. A patch blank 7 may be added in areas of the roof ring where additional strength may be needed, that is, where high loads may be expected. In some examples a patch blank 7 may be arranged within the front and/or rear cross beam blanks 3, 4. The patch blank 7 may be arranged substantially in a central portion of the front and/or rear cross beam blanks 3, 4. A patch blank 7 may also be arranged in the longitudinal beam blanks 1, 2 e.g., in the area which is above the B-pillar of the vehicle. The patch blank 7 may be arranged substantially in a central portion of the longitudinal beam blanks 1, 2.

The patch blanks 7 may be joined to the longitudinal beam blanks 1, 2 and/or the cross beam blanks 3, 4 by overlapping one of the blanks with the other blank and using spot welding. In other examples, alternative welding techniques may be used e.g. laser welding or arc welding.

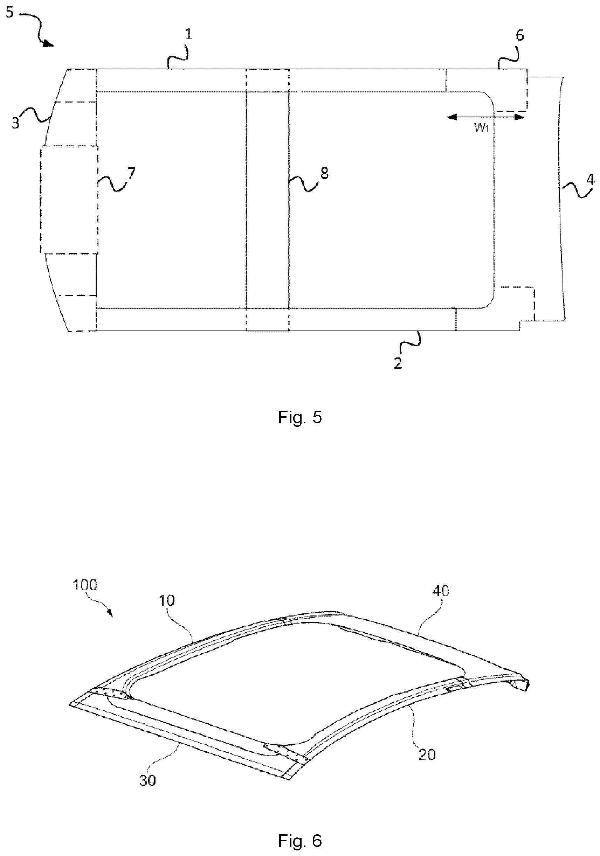

As schematically illustrated in figure 5, a unitary roof ring may include one or more additional cross-members located between the front and rear cross-member. In some examples, like the example of figure 5, the unitary roof ring 100 may be made from a combined blank that is made up of five blanks. In addition to the blanks illustrated in e.g. figures 2 and 3, the combined blank 5 may comprise a central cross beam blank 8 located between the front cross beam blank 3 and the rear cross beam blank 4, and extending transversally from the longitudinal beam blank 1 to the longitudinal beam blank 2. The central cross beam blank 8 may be joined to the longitudinal beam blanks 1, 2 by e.g. partially overlapping the blanks with each other. A central cross member in the unitary roof ring may provide an upper structural frame of a vehicle with enhanced crash performance and reduced weight.

In the example of figure 5, the overlapping region 6 formed by partially overlapping the front and rear cross beam blanks 3, 4 with the longitudinal beam blanks 1, 2 may have a width W₁ of at least 50% of the width of the front and rear cross beam blanks 3, 4. In this example, a bigger section of the longitudinal beam blanks 1, 2 may be overlapped with the cross beam blanks 3, 4 in comparison to the example in figure 3. In this case, the overlapping region is not entirely positioned within the longitudinal beams, but rather occupies a portion of the longitudinal beam as well as a portion of the rear cross member. Increased stiffness in a wider area of the unitary roof ring may be provided and higher loads may be withstood by increasing the size of the overlapping region 6.

In this particular example, a patch blank 7 may be arranged substantially in a central portion of the front cross beam blank 3. In other examples, a patch blank 7 may also be added in the longitudinal beam blanks 1, 2 in order to further reinforce specific areas in these blanks. In some examples, a patch blank 7 may be arranged substantially in a central portion of the longitudinal beam blanks 1, 2 overlapping with a portion of the central cross beam blank 8.

In some examples, the plurality of blanks that form the combined blank 5 may be made from different materials. In some examples, the blanks 1, 2, 3, 4 may be made from ultra-high strength steels (UHSS). Boron steel, e.g. 22MnB5, or other steel compositions mentioned or referred to before may be suitable UHSS. These blanks, e.g. boron steel blanks, may comprise an aluminum silicon coating or zinc coating.

Usibor^{®} 1500P is an example of a 22MnB5 steel. The composition of Usibor^{®} is summarized below in weight percentages (rest is iron (Fe) and impurities):
Maximum carbon (C) (%): 0.25
Maximum silicon (Si) (%): 0.4
Maximum manganese (Mn) (%): 1.4
Maximum phosphorus (P) (%): 0.03
Maximum sulphur (S) (%): 0.01
Aluminium (Al) (%): 0.01 - 0.1
Maximum titanium (Ti) (%): 0.05
Maximum niobium (Nb) (%): 0.01
Maximum copper (Cu) (%): 0.20
Maximum boron (B) (%): 0.005
Maximum chromium (Cr) (%): 0.35

Usibor^{®} 1500P may have a yield strength of e.g. 1.100 MPa, and an ultimate tensile strength of 1.500 MPa.

Usibor^{®} 2000 is another boron steel with even higher strength. The yield strength of Usibor^{®} 2000 may be 1.400 MPa or more, and the ultimate tensile strength may be above 1.800 MPa. The composition of Usibor^{®} 2000 is summarized below in weight percentages (rest is iron (Fe) and impurities):
Maximum carbon (C) (%): 0.36
Maximum silicon (Si) (%): 0.8
Maximum manganese (Mn) (%): 0.8
Maximum phosphorus (P) (%): 0.03
Maximum sulphur (S) (%): 0.01
Aluminium (Al) (%): 0.01 - 0.06
Maximum titanium (Ti) (%): 0.07
Maximum niobium (Nb) (%): 0.07
Maximum copper (Cu) (%): 0.20
Maximum boron (B) (%): 0.005
Maximum chromium (Cr) (%): 0.50
Maximum molybdenum (Mb) (%): 0.50

The plurality of blanks that form the combined blank 5 may comprise different material and/or thicknesses. For example, blanks of Usibor^{®} (e.g. Usibor^{®} 1500 and/or Usibor^{®} 2000) may be used in the blanks forming the combined blank 5. Using these types of materials in hot forming and subsequent quenching processes leads to a predominantly martensitic structure due to the Usibor^{®}. One or more of the blanks may be made from a different material, e.g. Ductibor^{®} 1000.

Ductibor^{®} 1000 is another material used in hot stamping for increasing the elongation when compared to Usibor^{®} 1500 and Usibor^{®} 2000. The yield strength of Ductibor^{®} 1000 may be 800 MPa or more, and the ultimate tensile strength of 1000 MPa or more. The composition of Ductibor^{®} 1000 is summarized below in weight percentages (rest is iron (Fe) and impurities):
Maximum carbon (C) (%): 0.10
Maximum silicon (Si) (%): 0.6
Maximum manganese (Mn) (%): 1.8
Maximum phosphorus (P) (%): 0.03
Maximum sulphur (S) (%): 0.01
Aluminium (Al) (%): 0.01 - 0.1
Maximum titanium (Ti) (%): 0.05
Maximum niobium (Nb) (%): 0.10
Maximum copper (Cu) (%): 0.20
Maximum boron (B) (%): 0.005
Maximum chromium (Cr) (%): 0.20

In some examples, the unitary roof ring 100 may comprise areas with different ultimate tensile strength according to any of the examples herein described. In some of these examples, different materials may be used in the combined blank.

In some of these examples, the areas with different ultimate tensile strength may have a different microstructure.

Different microstructures may be created in a hot formed roof ring. These different microstructures may be created by heating a combined blank 5 above the austenitization temperature and then controlling the cooling of the combined blank 5 during shaping the combined blank 5 to form a roof ring 100 of a vehicle framework. The cooling of different areas of the combined blank 5 may be controlled by providing zones of the forming tool with heaters. Accordingly, the unitary roof ring 100 comprises zones with a predominantly martensitic structure and zones comprising ferrite, perlite or bainite or a mixed of thereof. Alternatively, a different microstructure, may be created by partially heating, e.g. using a laser beam, a portion of the unitary roof ring which has been press-hardened to change the predominantly martensitic structure to a structure containing ferrite and/or perlite and/or bainite and/or tempered martensite and a mixed of thereof. The tensile strength of the predominantly martensitic structure may be above 1400 MPa, and specifically above 1500 MPa.

The unitary roof ring 100 may thus be made from a material which may be effective for absorbing energy during an impact. In some examples, the longitudinal beam blanks 1, 2 may be made at least from an ultra-high strength steel.

The thickness of the longitudinal rail portions 10, 20 may be of 0.5 - 2.5 mm, specifically of 1 - 1.8 mm. The longitudinal rail portions 10 may have an ultimate tensile strength of 1000 - 2000 MPa, specifically of 1500 - 2000 MPa. The longitudinal rail portions 10, 20 may be the roof rail outers of the upper structural frame of the vehicle.

In some examples, the cross-beam blanks 3, 4 may be made at least from an ultra-high strength steel.

The thickness of the cross members 30, 40 may be of 0.5 - 2.5 mm, specifically of 1 - 1.8 mm. An overlapping region may have a thickness of 2 - 5mm, specifically 2 - 3.8 mm.

The front and rear cross members 30, 40 may have an ultimate tensile strength of 1000 - 2000 MPa, specifically of 1500 - 2000 MPa. The front and rear cross members 10, 20 may be the front and rear headers of the upper structural frame of the vehicle.

In some examples, the thickness of the front and rear cross members 30, 40 may be less than the thickness of the longitudinal rails 10, 20. In other examples, the thickness of the front and rear cross members 30, 40 may be equal to the thickness of the longitudinal rails 10, 20.

In some examples, joining the blanks to each other comprises welding the blanks to each other. In some examples, the blanks may be welded by spot welding and/or laser welding. In some examples, the combined blank formed by joining the blanks may be a Tailor Welded Blank. Joining the blanks before the deformation may make the joining easier due to the blanks being substantially flat at the moment of joining. Welding blanks prior to the deformation process by laser and/or spot welding may be efficient and precise.

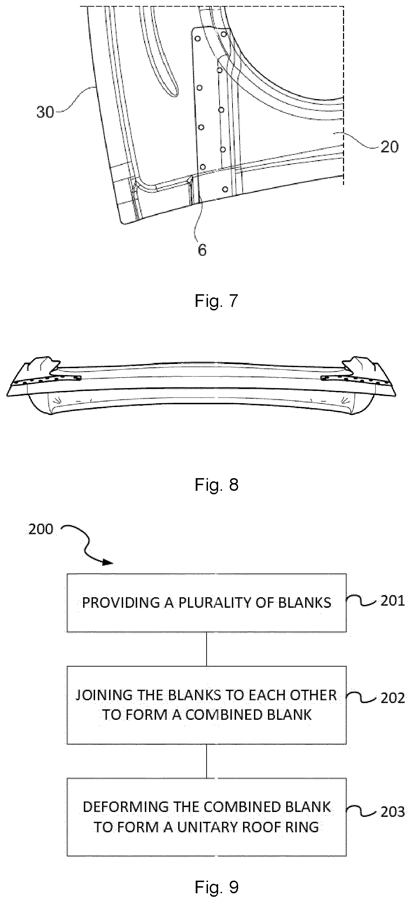

Figure 6 schematically illustrates an example of joined blanks after deforming. In this example, the longitudinal beam blanks 1, 2 may be joined to the cross beam blanks 3, 4 by overlapping one of the blanks with the other blank and using spot welding prior to deforming. An enlarged view of the overlapping region 6 of the junctions of the front cross member 30 with the longitudinal rail portion 10 may be seen in Figure 7. In other examples, joining the blanks to each other may comprise forming one or more overlapping regions 6 formed by partially overlapping the longitudinal beam blanks 1, 2 with the cross beam blanks 3, 4 by laser or spot welding.

Joining the blanks may result in weld seams or spots, critical areas which in case of a car crash may be easily broken. Deforming after joining may ensure that weld seams or spots are not present between blanks, providing a unitary roof ring 100 more resistant to crash events than other upper structural frames wherein the structural components are formed first and then joined. The hazards caused by these weld seams or spots disappear in the unitary roof ring 100, thereby reducing the risk of cracks in the unitary roof ring 100 in crash events. In addition, a unitary roof ring 100 may reduce time required to build a vehicle and may enable reducing thickness of neighbouring components of the roof ring 100 without compromising the thickness of its structural elements.

In some examples, deforming the combined blank 5 to form the unitary roof ring 100 may comprise hot forming or hot stamping the combined blank 5. A schematic front view of a hot formed unitary roof ring 100 may be seen in Figure 8.

In some examples, hot forming may comprise heating the combined blank 5 above the austenitization temperature, and then forming the combined blank 5 to create the unitary roof ring 100. In some examples, forming may comprise two or more forming steps. These forming steps may comprise for example shaping, trimming or cutting and may be made in a single multi-stage press. Examples of multi-stage presses are known from e.g. US 9,492,859 B2 and WO 2016142367 A1.

Deforming may include hot forming, i.e. heating the combined blank 5 in an oven, possibly above an austenization temperature, specifically above Ac3. After heating in the oven, the combined blank 5 may be transferred to a press in which the combined blank 5 is deformed to obtain the final shape of the unitary roof ring 100. During and immediately after forming, quenching may be carried out. In particular, the quenching may include cooling above a critical cooling rate so that a martensitic microstructure is obtained. In some examples, quenching may be avoided in selected portions of the roof ring.

In some examples, deforming is done in one single operation. Deforming the combined blank 5 may provide a unitary roof ring 100 including two longitudinal rail portions 10, 20 each connected to a front cross member 30 and to a rear cross member 40 to form a substantially closed ring shape.

In some examples, a roof ring 100 having substantially a ring shape comprising a front cross member 30, a rear cross member 40, a first longitudinal rail portion 10 and a second longitudinal rail portion 20 may be made by deforming a single blank.

The unitary roof ring 100 of the present disclosure may have improved crash resistance and may be produced with less processes. Therefore, the crash performance may be improved while reducing mass of the structural skeleton of the vehicle and building complexity.

Figure 9 represents a flow chart of a method for manufacturing a unitary roof ring of a vehicle framework 200. The method comprises providing a plurality of blanks 201; joining the blanks to each other to form a combined blank 202; deforming the combined blank to form a unitary roof ring 203.

In some examples, providing a plurality of blanks 201 may comprise providing two longitudinal beam blanks 1, 2, a front cross beam blank 3 and a rear cross beam blank 4. In some examples, the plurality of blanks that form the combined blank 5 may be made from different materials. In some examples, the longitudinal beam blanks 1, 2 and the front and rear cross beam blanks 3, 4 may be made from an ultra-high strength steel.

In some examples, joining the blanks to each other to form a combined blank 202 may comprise forming one or more overlapping regions 6 formed by partially overlapping the blanks to each other. The overlapping region 6 may be formed in or near a junction or transition of the front cross member 30 with one of the longitudinal rail portions 10, 20. The overlapping regions 6 may be formed in each of the junctions of the front and rear cross members 30, 40 with the two longitudinal rail portions 10, 20.

Deforming the combined blank to form a unitary roof ring 203 may comprise hot forming or hot stamping the combined blank 5. Different microstructures may be created in a hot formed roof ring. These different microstructures may be created by heating a combined blank 5 above the austenization temperature. In some examples, during and after forming, quenching may be carried out. Quenching may include cooling above a critical cooling rate so that a martensitic microstructure is obtained.

In some examples, different microstructures may be obtained by heating a combined blank 5 above the austenization temperature and then controlling the cooling of the combined blank 5 during shaping the combined blank 5 to form a unitary roof ring 100. In some examples, quenching may be avoided in selected portions of the unitary roof ring 100.

In some examples, deforming the combined blank to form a unitary roof ring 203 may be done in a single operation. The unitary roof ring 100 formed by deforming the combined blank 203 includes two longitudinal rail portions each connected to a front cross member and to a rear cross member to form a substantially closed ring shape.

For reasons of completeness, various aspects of the present disclosure are set out in the following numbered clauses:
Clause 1. A method for manufacturing a unitary roof ring 100 of a vehicle framework, the method comprising:
   providing a plurality of blanks (1, 2, 3, 4);
   joining the blanks to form a combined blank (5);
   deforming the combined blank (5) to form the unitary roof ring (100);
   wherein the unitary roof ring (100) includes two longitudinal rail portions (10, 20) each connected to a front cross member (30) and to a rear cross member (40) to form a substantially closed ring shape.
Clause 2. The method for manufacturing a unitary roof ring (100) according to clause 1, wherein joining the blanks comprises forming one or more overlapping regions (6) formed by partially overlapping the blanks with each other.
Clause 3. The method for manufacturing a unitary roof ring (100) according to clause 2, wherein one of the overlapping regions (6) is formed in a junction of the front cross member (30) with one of the longitudinal rail portions (10, 20).
Clause 4. The method for manufacturing a unitary roof ring (100) according to clause 3, wherein the overlapping region (6) is formed substantially within the front cross member (30).
Clause 5. The method for manufacturing a unitary roof ring (100) according to clause 4, wherein the overlapping region (6) has a length L₁ corresponding to a width of the longitudinal rail portion (10, 20) and has a width W₁ of at least 5 cm.
Clause 6. The method of any of clauses 3 - 5, wherein overlapping regions (6) are formed in each of the junctions of the front and rear cross members (30, 40) with the two longitudinal rail portions (10, 20).
Clause 7. The method for manufacturing a unitary roof ring (100) according to any of clauses 1 - 6, wherein joining the blanks comprises welding the blanks to each other.
Clause 8. The method for manufacturing a unitary roof ring (100) according to clause 7, wherein welding comprises resistance spot welding and/or laser welding.
Clause 9. The method for manufacturing a unitary roof ring (100) according to any of clauses 1 - 8, wherein deforming the combined blank (5) to form the unitary roof ring (100) comprises hot stamping the combined blank (5).
Clause 10. The method for manufacturing a unitary roof ring (100) according to any of clauses 1 - 9, wherein deforming is done in one single operation.
Clause 11. The method for manufacturing a unitary roof ring (100) according to any of clauses 1 - 10, wherein the two longitudinal rail portions (10, 20) comprise the roof rail outers and wherein the front and rear cross members (30, 40) comprise the front and rear headers of a vehicle framework.
Clause 12. The method for manufacturing a unitary roof ring (100) according to any of clauses 1 - 11, wherein the plurality of blanks (1, 2, 3, 4) comprises two longitudinal beam blanks (1, 2) and two cross beam blanks (3, 4).
Clause 13. The method for manufacturing a unitary roof ring (100) according to clause 12, wherein the plurality of blanks (1, 2, 3, 4) further comprises a central beam blank (8).
Clause 14. The method for manufacturing a unitary roof ring (100) according to any of clauses 1 - 13, wherein a patch blank (7) is joined to at least one of the plurality of blanks (1, 2, 3, 4) to form the combined blank (5).
Clause 15. The method for manufacturing a unitary roof ring (100) according to clause 14, wherein the patch blank (7) is arranged within the front and/or rear cross beam blank (3, 4).
Clause 16. The method for manufacturing a unitary roof ring (100) according to clause 15, wherein the patch blank (7) is arranged substantially in a central portion of the front and/or rear cross beam blanks (3, 4).
Clause 17. The method for manufacturing a unitary roof ring (100) according to any of clauses 1 - 16, wherein a thickness of the cross members (30, 40) is less than a thickness of the longitudinal rail portions (10, 20).
Clause 18. The method for manufacturing a unitary roof ring (100) according to any of clause 1 - 17, wherein the thickness of the longitudinal rail portions (10, 20) and/or the thickness of the cross members (30, 40) is of 0.5 - 2.5 mm, specifically of 1 - 1.8 mm.
Clause 19. The method for manufacturing a unitary roof ring (100) according to any of clauses 1 - 18, wherein the plurality of blanks (1, 2, 3, 4) is made from an ultra-high strength steel.
Clause 20. The method for manufacturing a unitary roof ring (100) according to any of clauses 1 - 19, wherein the unitary roof ring (100) has a tensile strength of 1500 - 2000 MPa.
Clause 21. A unitary roof ring (100) obtainable by a method according to any of clauses 1 - 20.
Clause 22. A roof ring (100) for a structural framework of a vehicle, substantially having a ring shape and comprising:
   a front cross member (30),
   a rear cross member (40),
   a first longitudinal rail portion (10), and a second longitudinal rail portion (20), wherein
   the roof ring (100) is made by deforming a single blank.
Clause 23. A unitary roof ring (100) according to clause 21, wherein the unitary roof ring (100) is part of the upper frame of a vehicle.
Clause 24. A vehicle comprising the unitary roof ring (100) according to clause 21 or 22.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow.

## Claims

1. A method for manufacturing a unitary roof ring (100) of a vehicle framework, the method comprising:
providing a plurality of blanks (1, 2, 3, 4);
joining the blanks to form a combined blank (5);
deforming the combined blank (5) to form the unitary roof ring (100);
wherein the unitary roof ring (100) includes two longitudinal rail portions (10, 20) each connected to a front cross member (30) and to a rear cross member (40) to form a substantially closed ring shape.

2. The method for manufacturing a unitary roof ring (100) according to claim 1, wherein joining the blanks comprises forming one or more overlapping regions (6) formed by partially overlapping the blanks with each other.

3. The method for manufacturing a unitary roof ring (100) according to claim 2, wherein one of the overlapping regions (6) is formed at a junction of the front cross member (30) with one of the longitudinal rail portions (10, 20).

4. The method for manufacturing a unitary roof ring (100) according to claim 3, wherein the overlapping region (6) is formed substantially within the front cross member (30).

5. The method for manufacturing a unitary roof ring (100) according to claim 4, wherein the overlapping region (6) has a length L₁ corresponding to a width of the longitudinal rail portion (10, 20) and has a width W₁ of at least 5 cm.

6. The method of any of claims 3 - 5, wherein overlapping regions (6) are formed in each of the junctions of the front and rear cross members (30, 40) with the two longitudinal rail portions (10, 20).

7. The method for manufacturing a unitary roof ring (100) according to any of claims 1 - 6, wherein joining the blanks comprises welding the blanks to each other, and optionally comprises resistance spot welding and/or laser welding.

8. The method for manufacturing a unitary roof ring (100) according to any of claims 1 - 7, wherein deforming the combined blank (5) to form the unitary roof ring (100) comprises hot stamping the combined blank (5).

9. The method for manufacturing a unitary roof ring (100) according to any of claims 1 - 8, wherein the plurality of blanks (1, 2, 3, 4) comprises two longitudinal beam blanks (1, 2) and two cross beam blanks (3, 4).

10. The method for manufacturing a unitary roof ring (100) according to any of claims 1 - 9, wherein a patch blank (7) is joined to at least one of the plurality of blanks (1, 2, 3, 4) to form the combined blank (5), and optionally wherein the patch blank (7) is arranged within the front and/or rear cross beam blank (3, 4).

11. The method for manufacturing a unitary roof ring (100) according to claim 10, wherein the patch blank (7) is arranged substantially in a central portion of the front and/or rear cross beam blanks (3, 4).

12. The method for manufacturing a unitary roof ring (100) according to any of claims 1 - 11, wherein a thickness of the cross members (30, 40) is less than a thickness of the longitudinal rail portions (10, 20).

13. The method for manufacturing a unitary roof ring (100) according to any of claims 1 - 12, wherein the unitary roof ring (100) has a tensile strength of 1500 - 2000 MPa.

14. A unitary roof ring (100) obtainable by a method according to any of claims 1 - 13.

15. A roof ring (100) for a structural framework of a vehicle, substantially having a ring shape and comprising:
a front cross member (30),
a rear cross member (40),
a first longitudinal rail portion (10), and a second longitudinal rail portion (20), wherein
the roof ring (100) is made by deforming a single blank.

## Patentansprüche

1. Verfahren zur Herstellung eines einheitlichen Dachrings (100) eines Fahrzeugrahmens, wobei das Verfahren umfasst:
Bereitstellen einer Vielzahl von Rohlingen (1, 2, 3, 4);
Zusammenfügen der Rohlinge zum Bilden eines kombinierten Rohlings (5);
Verformen des kombinierten Rohlings (5) zum Bilden des einheitlichen Dachrings (100);
wobei der einheitliche Dachring (100) zwei Längsrahmenabschnitte (10, 20) umfasst, die jeweils mit einem vorderen Querträger (30) und einem hinteren Querträger (40) verbunden sind, um eine im Wesentlichen geschlossene Ringform zu bilden.

2. Verfahren zur Herstellung eines einheitlichen Dachrings (100) nach Anspruch 1, wobei das Zusammenfügen der Rohlinge das Bilden eines oder mehrerer Überlappungsbereiche (6) umfasst, die durch teilweises Überlappen der Rohlinge miteinander gebildet werden.

3. Verfahren zur Herstellung eines einheitlichen Dachrings (100) nach Anspruch 2, wobei einer der Überlappungsbereiche (6) an einer Verbindungsstelle des vorderen Querträgers (30) mit einem der Längsrahmenabschnitte (10, 20) gebildet ist.

4. Verfahren zur Herstellung eines einheitlichen Dachrings (100) nach Anspruch 3, wobei der Überlappungsbereich (6) im Wesentlichen innerhalb des vorderen Querträgers (30) gebildet ist.

5. Verfahren zur Herstellung eines einheitlichen Dachrings (100) nach Anspruch 4, wobei der Überlappungsbereich (6) eine Länge L₁ aufweist, die einer Breite des Längsrahmenabschnitts (10, 20) entspricht, und eine Breite W₁ von mindestens 5 cm aufweist.

6. Verfahren nach einem der Ansprüche 3-5, wobei in jeder der Verbindungsstellen der vorderen und hinteren Querträger (30, 40) mit den beiden Längsrahmenabschnitten (10, 20) Überlappungsbereiche (6) gebildet sind.

7. Verfahren zur Herstellung eines einheitlichen Dachrings (100) nach einem der Ansprüche 1-6, wobei das Zusammenfügen der Rohlinge das Aneinanderschweißen der Rohlinge umfasst und optional das Widerstandspunktschweißen und/oder Laserschweißen umfasst.

8. Verfahren zur Herstellung eines einheitlichen Dachrings (100) nach einem der Ansprüche 1-7, wobei das Verformen des kombinierten Rohlings (5) zum Bilden des einheitlichen Dachrings (100) das Heißprägen des kombinierten Rohlings (5) umfasst.

9. Verfahren zur Herstellung eines einheitlichen Dachrings (100) nach einem der Ansprüche 1-8, wobei die Vielzahl von Rohlingen (1, 2, 3, 4) zwei Längsträgerrohlinge (1, 2) und zwei Querträgerrohlinge (3, 4) umfasst.

10. Verfahren zur Herstellung eines einheitlichen Dachrings (100) nach einem der Ansprüche 1-9, wobei ein Patchrohling (7) mit mindestens einem der Vielzahl von Rohlingen (1, 2, 3, 4) zum Bilden des kombinierten Rohlings (5) zusammengefügt wird, und optional wobei der Patchrohling (7) innerhalb des vorderen und/oder hinteren Querträgerrohlings (3, 4) angeordnet ist.

11. Verfahren zur Herstellung eines einheitlichen Dachrings (100) nach Anspruch 10, wobei der Patchrohling (7) im Wesentlichen in einem zentralen Abschnitt der vorderen und/oder hinteren Querträgerrohling (3, 4) angeordnet ist.

12. Verfahren zur Herstellung eines einheitlichen Dachrings (100) nach einem der Ansprüche 1-11, wobei die Dicke der Querträger (30, 40) geringer ist als eine Dicke der Längsrahmenabschnitte (10, 20).

13. Verfahren zur Herstellung eines einheitlichen Dachrings (100) nach einem der Ansprüche 1-12, wobei der einheitliche Dachring (100) eine Zugfestigkeit von 1500-2000 MPa aufweist.

14. Einheitlicher Dachring (100), der nach einem Verfahren nach einem der Ansprüche 1-13 erhältlich ist.

15. Dachring (100) für einen Strukturrahmen eines Fahrzeugs, der im Wesentlichen die Form eines Rings aufweist und umfasst:
einen vorderen Querträger (30),
einen hinteren Querträger (40),
einen ersten Längsrahmenabschnitt (10) und einen zweiten Längsrahmenabschnitt (20), wobei
der Dachring (100) durch Verformen eines einzelnen Rohlings hergestellt wird.

## Revendications

1. Procédé de fabrication d'un anneau de toit unitaire (100) d'un cadre de véhicule, le procédé comprenant :
la fourniture d'une pluralité d'ébauches (1, 2, 3, 4) ;
l'assemblage des ébauches pour former une ébauche combinée (5) ;
la déformation de l'ébauche combinée (5) pour former l'anneau de toit unitaire (100) ;
l'anneau de toit unitaire (100) comprenant deux parties rail longitudinal (10, 20) reliées chacune à un élément transversal avant (30) et à un élément transversal arrière (40) pour constituer une forme annulaire sensiblement fermée.

2. Procédé de fabrication d'un anneau de toit unitaire (100) selon la revendication 1, dans lequel l'assemblage des ébauches comprend la formation d'une ou de plusieurs zones de chevauchement (6) formées en faisant se chevaucher partiellement les ébauches les unes avec les autres.

3. Procédé de fabrication d'un anneau de toit unitaire (100) selon la revendication 2, dans lequel l'une des zones de chevauchement (6) est formée au niveau d'une jonction de l'élément transversal avant (30) avec l'une des parties rail longitudinal (10, 20).

4. Procédé de fabrication d'un anneau de toit unitaire (100) selon 1a revendication 3, dans lequel la zone de chevauchement (6) est formée sensiblement dans l'élément transversal avant (30).

5. Procédé de fabrication d'un anneau de toit unitaire (100) selon la revendication 4, dans lequel la zone de chevauchement (6) présente une longueur L₁ correspondant à une largeur de la partie rail longitudinal (10, 20) et présente une largeur W₁ d'au moins 5 cm.

6. Procédé selon l'une quelconque des revendications 3 à 5, dans lequel les zones de chevauchement (6) sont formées dans chacune des jonctions des éléments transversaux avant et arrière (30, 40) avec les deux parties rail longitudinal (10, 20).

7. Procédé de fabrication d'un anneau de toit unitaire (100) selon l'une quelconque des revendications 1 à 6, dans lequel l'assemblage des ébauches comprend le soudage des ébauches entre elles, et comprend éventuellement le soudage par points par résistance et/ou le soudage laser.

8. Procédé de fabrication d'un anneau de toit unitaire (100) selon l'une quelconque des revendications 1 à 7, dans lequel la déformation de l'ébauche combinée (5) pour former l'anneau de toit unitaire (100) comprend l'estampage à chaud de l'ébauche combinée (5).

9. Procédé de fabrication d'un anneau de toit unitaire (100) selon l'une quelconque des revendications 1 à 8, dans lequel la pluralité d'ébauches (1, 2, 3, 4) comprend deux ébauches de poutre longitudinale (1, 2) et deux ébauches de poutre transversale (3, 4).

10. Procédé de fabrication d'un anneau de toit unitaire (100) selon l'une quelconque des revendications 1 à 9, dans lequel une ébauche de renfort (7) est assemblée à au moins l'une des ébauches (1, 2, 3, 4) pour former l'ébauche combinée (5), et éventuellement dans lequel l'ébauche de renfort (7) est agencée à l'intérieur de l'ébauche de poutre transversale (3, 4) avant et/ou arrière.

11. Procédé de fabrication d'un anneau de toit unitaire (100) selon la revendication 10, dans lequel l'ébauche de renfort (7) est agencée sensiblement dans une partie centrale des ébauches de poutre transversale (3, 4) avant et/ou arrière.

12. Procédé de fabrication d'un anneau de toit unitaire (100) selon l'une quelconque des revendications 1 à 11, dans lequel l'épaisseur des éléments transversaux (30, 40) est inférieure à l'épaisseur des parties rail longitudinal (10, 20).

13. Procédé de fabrication d'un anneau de toit unitaire (100) selon l'une quelconque des revendications 1 à 12, dans lequel l'anneau de toit unitaire (100) présente une résistance à la traction de 1500 à 2000 MPa.

14. Anneau de toit unitaire (100) pouvant être obtenu par un procédé selon l'une quelconque des revendications 1 à 13.

15. Anneau de toit (100) pour un cadre structural d'un véhicule, présentant sensiblement une forme annulaire et comprenant :
un élément transversal avant (30),
un élément transversal arrière (40),
une première partie rail longitudinal (10) et une seconde partie rail longitudinal (20), dans lequel
l'anneau de toit (100) étant fabriqué en déformant une seule ébauche.
